Europäisches Patentamt

European Patent Office

Office européen des brevets

(19)

(11) Publication number: **0 021 548**
**B1**

(12) **EUROPEAN PATENT SPECIFICATION**

(45) Date of publication of patent specification: **04.04.84**

(51) Int. Cl.³: **A 22 B 3/06**

(21) Application number: **80200615.5**

(22) Date of filing: **24.06.80**

(54) **An apparatus for electrically stunning animals to be slaughtered, in particular pigs.**

(30) Priority: **25.06.79 NL 7904935**

(43) Date of publication of application:
**07.01.81 Bulletin 81/1**

(45) Publication of the grant of the patent:
**04.04.84 Bulletin 84/14**

(84) Designated Contracting States:
**AT BE CH DE FR GB IT LI LU NL SE**

(56) References cited:
**CH - A - 157 020**
**FR - A - 693 639**
**NL - A - 7 705 519**

(73) Proprietor: **MACHINEFABRIEK G.J. NIJHUIS B.V.**
**Parallelweg 4**
**NL-7102 DE Winterswijk (NL)**

(72) Inventor: **Nijhuis, Johan Willem**
**Haitsma Mulierweg 53**
**NL-Winterswijk (NL)**

(74) Representative: **van der Beek, George Frans, Ir.**
**et al,**
**Nederlandsch Octrooibureau P.O. Box 29720**
**NL-2502 LS The Hague (NL)**

Courier Press, Leamington Spa, England.

## An apparatus for electrically stunning animals to be slaughtered, in particular pigs.

The invention relates to an apparatus for electrically stunning animals to be slaughtered, in particular pigs, comprising two endless conveyors, said conveyors being operable to run parallel to each other and at a synchronized rate and being positioned to form a substantially V-shaped passageway between the operating surfaces thereof, as well as a pair of electrodes or sets of electrodes, said electrodes or sets of electrodes being insulated with respect to each other and being adapted to extend into said V-shaped passageway, said electrodes furthermore being adapted to engage the head of the animal to be stunned and being mounted to be movable out of said passageway and comprising furthermore means operative to substantially reduce to zero the difference in velocity between the electrodes and the conveyors upon closure of the current circuit between the two electrodes or sets of electrodes respectively.

An apparatus of this type has been described in the older European patent application 80 200420.0 published after the filing date of the present application, which patent application forms a further development of the apparatus known from French patent specification 23 90 903.

According to said prior proposals the electrodes or sets of electrodes respectively are arranged in the direction of movement of the conveyors behind each other at a distance from each other. Consequently the animal moved by the conveyors will first meet the first electrode or set of electrodes which pass over the head of the animal and will thereafter meet the second electrode or sets of electrodes respectively and only then can a current flow from one electrode or sets of electrodes to the other electrode or set of electrodes. This current initially is a sensing current to determine proper contact and proper resistance after the stunning current is allowed to flow from one electrode or set of electrodes towards the other electrode or set of electrodes through the head of the animal.

Like it has been explained in the older European patent application 80 200420.0 that when stunning one has to take care that no improper or insufficient current passage occurs because such a current passage will lead to damaging the animal to be slaughtered. The current passage required for the stunning should pass directly through the head of the animal at the correct potential and the correct intensity. When such current passage is not obtained or is insufficient arbitrary muscular contractions will occur causing bone breakage and internal bleedings respectively. The meat of such an animal will then be classified in a lower quality class.

When stunning with the aid of manually operated stunning means there are utilized stunning rods which may be made to engage the head of the animal either in the longitudinal direction or in a direction transverse thereto. The percentage of animals that may not be considered to be of prime quality because of internal bleedings and bone breakage, respectively, is relatively low and amounts to only some animals per one thousand thereof. The manual stunning presents, however, the draw back that upon increasing the production the drop out percentage increases too because the operators performing the manual stunning will then be subjected to a greater stress.

For avoiding the situation that the animal to be stunned is only unconscious and hence seems to be stunned but has not been stunned in reality it is desired to use a higher voltage than would be safe for the operators. Most of the above mentioned considerations have only become apparent after the filing of the first Dutch patent application 7705519 on the basis of which French patent 23 90 903 has been obtained.

The application of the latter apparatus in practice was conducive to a higher drop out percentage than that occurring in manual stunning. As a consequence thereof there has been an assiduous search for finding further improvements such as the provision of a damping device for damping the movements of the electrodes in the non-prepublished proposition according to the European patent application 80200419.2, the maintenance of a fixed distance between the electrodes according to the non-prepublished European patent application 80200418.4 and the joint movement of the electrodes and the animal according to the European patent application 80200420.0. Although these improvements were conducive to a decrease of the drop out percentage such decrease was not sufficient.

The object of the invention accordingly is to provide an apparatus in which the occurrence of drop out will be lower than that in manual stunning.

Surprisingly this object according to the invention is obtained in that the two electrodes or sets of electrodes respectively are adapted to be arranged side by side in said passageway in a manner in which they block the passageway transversely and said electrodes or sets of electrodes respectively in said position define between the electrodes a space for the animal's head which is V-shaped or curved forwardly and downwardly and forwardly inclined with respect to the vertical. The electrodes are thus not positioned anymore in a consecutive manner but side by side so that the current will pass transversely through the brains of the animal. When applying the consecutive electrode arrangement the animal could already become disquieted upon being engaged by the first electrodes. According to the invention the animal now will be engaged by both the electrodes or set of electrodes substantially at the same time because due to the curved or V-shaped form of the space into which the animal's head enters and the downward and forward inclination the electrodes will certainly engage the front side faces of the head independent of whether the animal is keeping its head upwardly or downwardly.

Thereupon a sensing current of low voltage will start to flow, said current registering whether the proper resistance is presented or not. Every kind of animal presents its own specific resistance so that it is therefore possible to determine whether the animal is e.g. a pig or not on the basis of this current. When a current connection between the electrodes is established in this manner, this being the case when the electrodes engage the head of the animal in the proper way, the main current is switched in and the stunning occurs.

It is very surprising that in this way an automatic stunning may be attained at a drop out percentage that is not only lower than that in the older propositions for automatic stunning, but also lower than that in manual stunning particularly in manually stunning with electrodes placed on the head in a transverse manner. While maintaining the proper quality, that is to say at an equally low drop out percentage, the production may now be increased considerably.

Preferably the apparatus is constructed in such a manner that the two electrodes consists of two plates, the outer edges of which are substantially parallel to the respective operating surfaces and run at close proximity of the pertaining operating surfaces of said conveyors and the edges of which facing each other diverge from the lower end thereof in upward direction up to about half the height of said plates, whereupon by means of a curvature said latter edges merge into a converging portion. When applying this shape there will be excluded the danger that the animal will put its head into the gap between one electrode and one conveyor. The animal will seek the space between the two electrodes whereby the snout of the animal will seek more or less unintentionally the correct position with respect to the electrodes so that these electrodes will pass across the sides of the snout and head. The current will then be switched in at the correct moment while using optionally, apart from the above mentioned sensing current, an adjustable time relay so that the current will pass with certainty transversely through the brains at the correct position. When the stunning jolt of current is switched in a movement is imparted to the electrodes e.g. in the way like described in the European patent application 80200420.0 so that the proper contact will remain assured. The difference in velocity between the conveyors and the frame will then be reduced substantially to zero.

Preferably, when viewed in the direction of conveyance, the electrodes have been mounted or shaped in such a V-shaped or arcuate manner, respectively, that the parts of said two electrodes or sets of electrodes respectively at closest distance from each other extend also farthest to the front in the direction of conveyance. It is preferred that this V-shape or arcuate shape is most pronounced at half the height of the electrodes. This shape is the most favourable for catching the head of the animal in the most appropriate way.

Instead of plates for each electrode a plurality of rods can be used each forming a set of electrodes.

The invention will now be elucidated in detail with reference to the drawings.

Fig. 1 shows a side elevation, partially in cross section along the line I—I in Fig. 2 of the apparatus according to the invention.

Fig. 2 shows a cross section along the line II—II in Fig. 1.

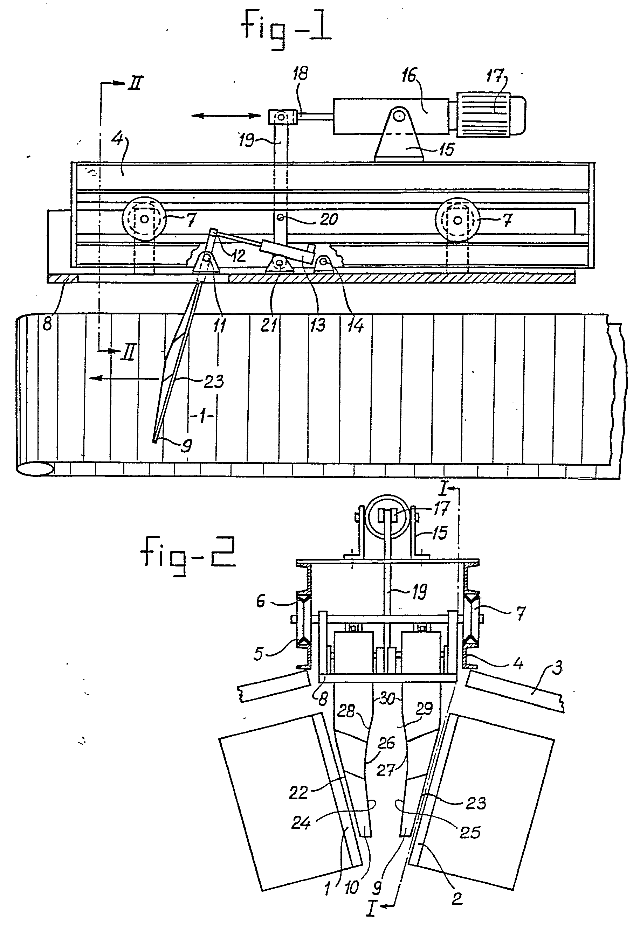

With reference to Fig. 1 there have been shown two conveyors 1 and 2, said conveyors being positioned to form a substantially V-shaped passage way between which conveyors the animals may be transported in a way known per se.

On top of the frame 3 of the apparatus, said frame only being indicated schematically in Fig. 2 there is a frame 4 said latter frame being fastened to the former one. Said frame 4 comprises lower and upper U-shaped profiles, the flanges of which facing each other are provided with V-shaped rail surfaces 5 and 6 for the runners 7 of a frame 8.

In said frame 8 two electrodes 9 and 10 are rotatably mounted on a shaft 11 which electrodes are hingedly coupled to a damped spring 13, by means of a rod 12 said spring being hingedly fastened in the frame 8 at 14. In a way not shown but known per se the electrodes 9 and 10 are insulated with respect to each other on the shaft 11 as well as with respect to the frame 8. In a way not shown the electrodes have been further connected to current conductors.

On top of the frame there is a support 15 in which there has been fastened a hydraulic cylinder 16 including a motor driven pump 17 coupled thereto. The piston rod 18 of the cylinder 16 has been coupled by means of a lever 19 to the frame 4 and to the frame 8 at 20 and at 21, respectively. A movement of the piston rod to the right hand side will be conducive to a movement of the frame 8 together with the electrodes in the direction of conveyance.

The electrodes 9 and 10 possess outer side edges 22, 23 running parallel to the operating surfaces of the conveyors 1 and 2 and at close proximity thereof.

The inner edges facing each other possess diverging lower portions 24 and 25 merging by means of a curvature 26, 27 into converging portions 28, 29, the latter merging finally into parallel edge portions 30.

In horizontal cross section each one of the electrodes is curved, the strongest curvature being present at the level of the portion 26 or 27 respectively. This curvature is such that, when viewed in the direction of conveyance, the edges 26 and 27, respectively, will be present in front of the edges 22, 23 and will preferably form part of an arc. In the lower portion and in the upper portion, that is to say the portions having diverging edges 24, 25 and converging edges 28, 29, respectively, this curvature may be less pronounced. It is conceivable to use an embodiment in which, when viewed from below, the lower portions of the electrodes constitute flat planes positioned to form together a V-shaped border line, said planes either maintaining said V-shaped though at a change of the angle or merging into a curvature.

## Claims

1. An apparatus for electrically stunning animals to be slaughtered, in particular pigs, comprising two endless conveyors (1, 2), said conveyors being operable to run parallel to each other and at a synchronized rate and being positioned to form a substantially V-shaped passageway between the operating surfaces (1, 2) thereof, as well as a pair of electrodes (9, 10) or sets of electrodes, said electrodes (9, 10) or sets of electrodes being insulated with respect to each other and being adapted to extend into said V-shaped passageway, said electrodes (9, 10) furthermore being adapted to engage the head of the animal to be stunned and being mounted to be movable out of said passageway and comprising furthermore means (7—20) operative to substantially reduce to zero the difference in velocity between the electrodes (9, 10) and the conveyors (1, 2) upon closure of the current circuit between the two electrodes (9, 10) or sets of electrodes respectively, characterized in that the two electrodes (9, 10) or sets of electrodes respectively are adapted to be arranged side by side in said passageway in a manner in which they block the passageway transversely and said electrodes (9, 10) or sets of electrodes respectively in said position define between the electrodes a space for the animal's head which is V-shaped or curved forwardly and downwardly and forwardly inclined with respect to the vertical.

2. The apparatus according to claim 1, characterized in that the two electrodes (9, 10) consist of two plates, the outer edges (22, 23) of which are substantially parallel to the respective operating surfaces (1, 2) and run at close proximity of the pertaining operating surfaces of said conveyors (1, 2) and the edges (24—30) of which facing each other diverge (24, 25) from the lower end thereof in upward direction up to about half the height of said plates, whereupon by means of a curvature (26, 27) said latter edges merge into a converging portion (28, 29).

3. The apparatus according to claim 1 or 2, characterized in that when viewed in the direction of conveyance, the electrodes (9, 10) have been mounted or shaped in such a V-shaped or arcuate manner, respectively, that the parts (24, 25) of said two electrodes or sets of electrodes respectively at closest distance from each other extend also farthest to the front in the direction of conveyance (Fig. 1).

## Revendications

1. Appareil pour assommer par voie électrique des bêtes à abattre, notamment des porcs, comportant deux transporteurs sans fin (1, 2), lesdits transporteurs étant aptes à fonctionner parallèlement l'un à l'autre et à une vitesse synchronisée et étant disposés de façon à définir un passage sensiblement en V entre leurs surfaces actives (1, 2) ainsi qu'une paires d'électrodes (9, 10) ou de séries d'électrodes, lesdites électrodes (9, 10), ou séries d'électrodes étant isolées l'une par rapport à l'autre et agencées pour pénétrer dans ledit passage en V, lesdites électrodes (9, 10) étant de plus agencées pour porter contre la tête de la bête à assommer et étant montées de façon à pouvoir se déplacer pour sortir dudit passage et comportant, en outre, des moyens (7—20) agissant pour ramener sensiblement à zéro la différence de vitesse entre les électrodes (9, 10) et les transporteurs (1, 2) lors de la fermeture du circuit de courant reliant les deux électrodes (9, 10) ou séries d'électrodes, caractérisé en ce que les deux électrodes (9, 10) ou séries d'électrodes sont agencées pour être disposées côte à côte dans ledit passage de manière à intercepter transversalement le passage et lesdites électrodes (9, 10) ou séries d'électrodes ainsi placées définissent entre elles un espace de réception de la tête de la bête qui est coudé en V ou arqué vers l'avant et vers le bas et incliné vers l'avant par rapport à la verticale.

2. Appareil selon la revendication 1, caractérisé en ce que les deux électrodes (9, 10) sont constituées par deux plaques, dont les bords extérieurs (22, 23) sont sensiblement parallèles aux faces actives respectives (1, 2) et s'étendent au voisinage immédiat des surfaces actives correspondantes desdits transporteurs (1, 2) et dont les bords (24—30) qui se font face divergent (24, 25) depuis leur extrémité inférieure en direction du haut jusqu'à environ la moitié de la hauteur desdites plaques, après quoi ces derniers bords se fondent au moyen d'une courbure (26, 27) en une partie convergente (28, 29).

3. Appareil selon l'une des revendications 1 ou 2, caractérisé en ce que les électrodes (9, 10), vues dans la direction de transport, ont par montage ou par façonnage une forme en V ou arquée telle que les parties (24, 25) des deux électrodes ou séries d'électrodes respectivement les plus voisines l'une de l'autre s'étendent aussi le plus loin vers l'avant dans la direction de transport (figure 1).

## Patentansprüche

1. Gerät zur elektrischen Betäubung von Schlachttieren, insbesondere Schweinen, mit zwei endlosen Förderern (1, 2), die parallel zueinander mit synchroner Geschwindigkeit laufend betriebbar sind und so angeordnet, daß sie einen im wesentlichen V-förmigen Durchlaß zwischen ihren Wirkflächen (1, 2) bilden, und mit zwei Elektroden (9, 10) oder Elektrodensätzen, wobei die Elektroden (9, 10) oder Elektrodensätze gegeneinander isoliert und in den V-förmigen Durchlaß hineinragend ausgelegt sind und wobei die Elektroden (9, 10) weiter zur Anlage an den Kopf des zu betäubenden Tieres ausgelegt und aus dem Durchlaß heraus bewegbar angebracht sind, und mit weiteren Mitteln (7—20), die auf Schließen des Stromkreises zwischen den beiden Elektroden bzw. Elektrodensätzen zur Herabsetzung der Geschwindigkeitsdifferenz zwischen den Elektroden (9, 10) und den Förderern (1, 2) im wesentlichen auf Null betriebbar sind, dadurch gekennzeichnet, daß die beiden Elektroden (9, 10) bzw. Elektrodensätze zur Anordnung nebeneinander in dem Durchlaß in einer Weise angeordnet sind, in der sie den Durchlaß in Querrichtung sperren und die Elektroden (9, 10) bzw. Elektrodensätze in dieser Stellung zwischen den Elektroden einen Raum für den Tierkopf bestimmen, der V-förmig oder nach vorne und unten gekrümmt und nach vorne gegen die Vertikale geneigt ist.

2. Gerät nach Anspruch 1, dadurch gekennzeichnet, daß die beiden Elektroden (9, 10) aus zwei Platten bestehen, deren Außenkanten (22, 23) im wesentlichn parallel zur jeweiligen Wirkfläche (1, 2) sind und in enger Nachbarschaft zu der jeweiligen Wirkfläche der Förderer (1, 2) verlaufen und deren einander zugewendete Kanten (24—30) von ihrem unteren Ende an nach oben bis etwa zur halben Höhe der Platten auseinanderstreben (24, 25) woraufhin der Kanten mittels einer Krümmung (26, 27) in einen zusammenstrebenden Abschnitt (28, 29) übergehen.

3. Gerät nach Anspruch 1 oder 2, dadurch gekennzeichnet, daß die Elektroden (9, 10) in Förderrichtung gesehen in V-förmiger bzw. gekrümmter Art angebracht oder geformt sind und daß die jeweils mit engstem Abstand voneinander befindlichen Teile (24, 25) der beiden Elektroden bzw. Elektrodensätze in Förderrichtung auch am weitesten nach vorne reichen (Fig. 1).

Fig-1

Fig-2